Europäisches Patentamt

European Patent Office

Office européen des brevets

(19)

(11) Publication number: **0 226 524**
**B1**

# EUROPEAN PATENT SPECIFICATION

(12)

(45) Date of publication of the patent specification:
24.10.90

(51) Int. Cl.⁵: **F16B 13/06, F16B 21/16**

(21) Application number: 86500001.2

(22) Date of filing: 27.10.86

(54) Improvements introduced in the anchoring systems by threaded bolts.

(30) Priority: 31.10.85 ES 548461

(43) Date of publication of application:
24.06.87 Bulletin 87/26

(45) Publication of the grant of the patent:
24.10.90 Bulletin 90/43

(84) Designated Contracting States:
AT BE CH DE FR GB IT LI NL SE

(56) References cited:
EP-A- 0 062 280
CH-A- 565 956
DE-A- 3 243 240
DE-A- 3 311 264
DE-B- 2 553 392
US-A- 4 112 813

(73) Proprietor: Sanchez Velasco, Vicente, Canillas, 93 - 4 - A,
Madrid(ES)

(72) Inventor: Sanchez Velasco, Vicente, Canillas, 93 - 4 - A,
Madrid(ES)

(74) Representative: Toro Arenal, José Maria, Viriato, 56,
E-28010 Madrid(ES)

ACTORUM AG

## Description

The present invention refers to a threadad anchoring stud intended to be installed in drills previously made on blocks, tiles or walls of concrete or brick, stone blocks, etc., which drills, at a certain depth, have a cavity of a diameter bigger than the drill itself and within said cavity the axial fixation of the anchoring stud is made. These cavities may have any shape, though normally they are an annular hole which surface closer to the drill has a trunk-conical shape. Not only the drill but also the annular hole will be made by any conventional means and using any adequate tool, and the performance of said drill is left out of the scope of the present invention.

In a more concrete mode, the stud preconized is specially applicable to anchorage systems on concrete. So, hereinafter, this material is to be mentioned as the constituent of the receiving element of the stud, though, as previously said, it may be any other material.

Anchoring studs are available which are provided with a threaded portion at one of their ends with which the corresponding tightening nut cooperates in order to be fastened, assisted by a washer, incorporating at the opposite end of the stud, a trunk-conical head divergent with respect to the body of the stud and as from it, said head being approximately coincident, from the dimensional point of view and concretely in correspondence with its maximum diameter belonging to its bigger and free basis, with the drill in the concrete within which the stud is to be installed.

The smaller basis of said head presents a diameter which is coincident with that of first portion of the stud defining one neck, also longitudinally striated, which diameter is, in turn, narrower than the rest of the stud. With this head collaborates a bush, provided in turn at its internal end with a conical face, on which said head acts on the tightening of the stud, in such a manner that this tightening causes a radial deformation of the mouth of the bush and consequently an intimate adaptation of the latter to the lateral surface of the hole in which the whole assemby of the stud is housed.

This solution, concretely reflected in the European Patent Application number 82 102 654.9, and also in the USA Patent number 4 112 813, is valid when the anchorage does not have to withstand very strong forces, but it is not the same when the magnitude of said forces is such that, whatever the friction between the bush and the wall of the hole, the former may be subject to sliding out. The invention is set out in Claim 1. Advantageous embodiments of the invention are featured in Claims 2 to 5.

The stud of the invention has its characteristics centred in the fact that, apart from the basic structure previously mentioned, and with a substantially shorter bush, which does not reach the working zone of the trunk-conical head as an axial and internal prolongation of same and concretely on the striated coller of the shank, various pieces are installed which in their whole define a cylindrical bush with its internal surface striated, and with its external surface provided with a perimetral groove on which is located an elastic ring which holds said pieces adaptad against the neck of the stud, and which permiteral groove makes up, besides, a weakening line for said pieces, which permits that the same be, in the operational phase of fixation of the stud obtusely bent outwards until defining an angle which is determined by the conicity of the trunk-conical head of the stud.

Besides, these pieces show, also in their external face, at their end opposite to that of incidence over said head, an external perimetral offset intended to the coupling of said pieces at the nozzle of a sleeve, in turn internally offset and which is adapted to the bigger diameter of the stud, affecting it in all its length.

At the same time, this sleeve incorporates an external perimetral groove, close to its receptor end of the set of pieces mentioned, in which groove is intalled an elastic nozzle the legs of which press the side surface of the stud through two diametrically opposite areas in which said groove perforates the walls of the sleeve, said fork having the end of, during the installation of the stud, moving along the stud until reaching the echeloning defined by the neck of same, in which situation it recuperates elastically, fixing so the stud and the sleeve axially and acting consequently as a link between these elements.

To obtain this axial fixation between stud and sleeve at said stud, concretely at the lonking point between its body and its neck, an abrupt echeloning is defined, preferably at right angles, so that once the arms of the fork close elastically on the neck, there exists the possibility of uncoupling before an axial traction on the stud.

It should be highlighted as well, in accordance with another characteristc of the invention, that the length of the pieces associated to the neck of the stud, and more concretely the length of same defined between the folding groove and its end adjacent to the trunk-conical head of the stud, is the adequate one so that when folded they result laterally overlapping in a dimension determined by the transverse dimensions of the cavity of the drill in which the stud is to be installed, whilst the length of said pieces, between the cited folding groove and the end opposite to the head of the stud, is the adequate one for it to exert an internal pressure in the mostly tensioned area of the walls of the drill, avoiding its collapse.

In a similar way, the folding groove existing in the internal face of these pieces has the adequate dimension to allow the outwards folding to be made with an angle equivalent to that of conicity of the head of the stud.

The transverse sections of the pieces grouped on the neck of the stud define sectors of circular crown, which, at the area comprised between the folding groove and the end opposite to the head of the stud, have constant and equal internal and external diameters, respectively to those of the neck of the stud and to those of the bigger base of its head, so that all these elements make up a cylinder, whilst the other sector of said pieces may have the same section as the rest of the pieces or have diameters varying respectively, increasing towards its free end, with the same formula of variation as the diameters of the trunk-conical head of the stud and of the cavity of the drill, for which when folding these areas of the pieces during the installation of the stud, they show internal and external difficulties which constitute cone trunks equal to those forming the head of the stud and the cavity of the drill in which the stud is installed.

Another characteristic which is preconized is centered in the fact that the end areas of the internal face of said pieces have longitudinal grooves which gear with others that exist at the head and the neck of the stud, which may have been incised previously, but in a similar way, if the enveloping pieces are of a material softer than the stud and may be produced during the installation of the stud by the pressure to which they are submitted. It has also been set forth that the mentioned offset end of these pieces be introduced between the sleeve and the neck of the stud with the necessary adjustment to hinder the radial movement of said pieces, avoiding their unmeshing.

Going back again to the elastic fork, this present a separation between its arms equal to the diameter of the neck of the stud, for which it recuperates elastically upon reaching this area, closing on it when the folding of the group of pieces surronding said neck is completed, setting forth the axial retention previously mentioned.

In this sense, there is also the possibility that the mentioned fork be housed in a groove made at the bore of the sleeve, in which case the latter will lack the two drillings of the sleeve.

As a complement of the structure described and like other of the characteristics of the invention, it has been set-forth that for the folding of said set of pieces which houses the neck of the stud, a complementary tool may be used, comprising a cylindrical first piece, internally threaded in correspondence with the threads of the stud, which first piece, at one of its ends, has a polygonal head, movable - with a key, whilst at the other end it has a plain surface which makes frontal contact, with interposition of an axial bearing or anti-friction bush, with a second piece having two plain faces, one of which being in contact with the first piece, and the other one, in use, being in contact with an ares surrounding the hole for insertion of the anchor and from which coaxially protrudes a neck, which internal and external diameters are respectively coincident with the internal and external diameters of the sleeve, both pieces being held coupled with the cooperstion of an elastic ring.

In this sense, the full length of the tool is adequate so that during the installation of the expansion anchor assembly, the end of the stud is levelled with the end of the threaded piece of the tool when the folding set forth for the pieces is completed.

To complement the description that is being made and in order to help to a better understanding of the characteristics of the invention, enclosed herewith, as an integral part of the specification, is a set of drawings in which, with an illustrative but not limitative character, the following has been represented:

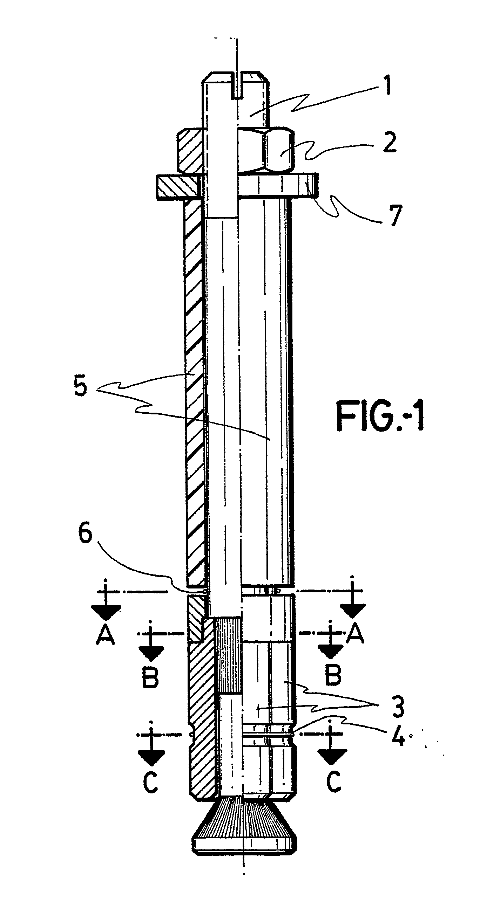

FIGURE 1 shows a side elevation and sectional view at one fourth of an anchoring threaded stud made in accordance with the object of the present invention;

FIGURE 2 shows a cross-sectional section of the stud at level of the elastic nozzle in accordance with the two possibilities provided for the purpose; one in which said fork is internal to the sleeve and another in which it is external to same, all of it in accordance with the A–A cutting line of Figure 1,

FIGURE 3 shows the same detail of the previous figure, in its two versions, at the end of the fastening of the anhoring, concretely when the mentioned fork has reached the neck of the stud;

FIGURE 4 shows another cross-sectional view of the stud, in this case made at level of the perimetral groove of the group of pieces which surround the neck of the stud in which is located the elastic retention ring for same, as per the C–C cutting line of Figure 1;

FIGURE 5 shows another cross-sectional view of the stud, in accordance with the B–B cutting line of Figure 1, concretely at the level of the linking area between this group of pieces and the sleeve, having it been represented by a considerably enlarged view in which are noticed the complementary indentations between said group of enveloping pieces of the neck and the neck;

FIGURE 6 shows a side elevation and sectional view at one fourth of the tool intended for the implantation and fixation of the anchor;

FIGURE 7 shows a side elevation view of an anchoring-tool duly housed in a hole previously made on a concrete - wall, as being coupled to said stud the tool represented in the previous Figure, and all of it under conditions of initiating the relative fixation.

FIGURE 8 shows, as per a representation similar to that of Figura 7, the location of the stud at the end of said operational step of fixation, concretely when the terminal sector of the pieces associated to the stud neck has been deformated, radially, but whilst the working tool associated to the stud is yet held; and

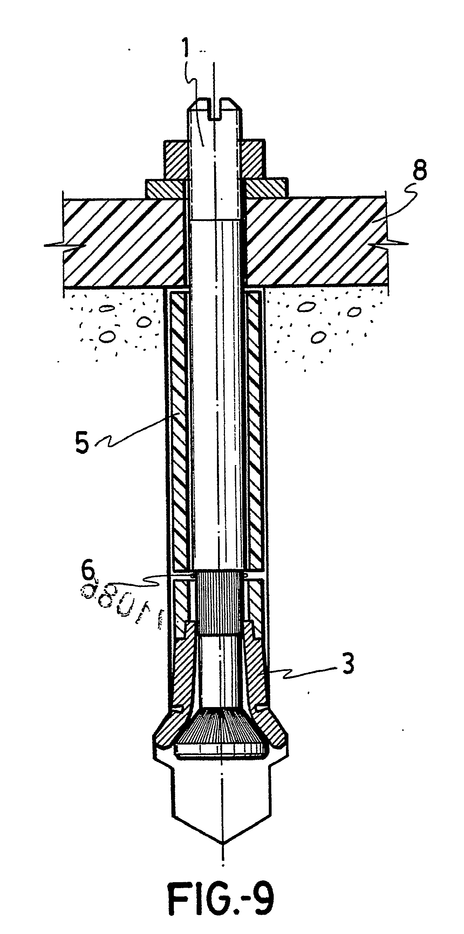

FIGURE 9 shows finally the same assembly of the previous Figure after the elimination of said tool and its substitution by the piece to be fastened throu the relative anchor.

With referente to these Figures, it can be noted how the stud which is preconized is based on the following:

The stud (1) is a cilindrical rod having a threaded section at one end, and at the other one has a trunk-conical head. At the threaded section of the stud is installed a nut (2) and a washer (7), through which are fastened the elements to be fastened by means of the anchoring stud to the concrete wall or tile, brick, and similar. At the threaded end of the stud (1) there is a slot or similar to fasten it with a screwdriver or with the corresponding key when initiating the tightening of the nut. Close to the trunk-conical head of the stud (1) it has a neck, that is, a cylindrical area the diameter of which es less than that of the rest of the stud. The smaller base of the trunk- conical head has the same transverse section than the neck and is adjacent to it. The larger base, which constitutes the end of the stud, is bigger than the transverse section of the rest of the stud and is approximately the same (with the necessary clearance) as the drill in which the anchoring stud is installed.

Around the neck of the stud (1) are located several pieces (3) which are equal among themselves and having a basically prismatic shape, which lengths are the same as that of the neck. These pieces (3) have at their two ends longitudinal grooves at the internal face. At the end adjacent to the sleeve (5) they have, at the external face, an offset which allows that this offsed end be introduced in the sleeve (5) being adjusted between it and the neck of the stud (1).

At the side surface of the trunk-conical head of the stud (1), there are longitudinal grooves which mesh with those existing at one of the ends of the pieces (3), making up a system which prevents the rotation of the stud (1) during the tightening of the nut (2) for the same purpose; the neck of the stud has, at the area opposite the head of the stud, longitudinal grooves which mesh with those the pieces have (3) at their other end. The length of the grooves existing at the neck is enough for said meshing to be held after the movement of the stud (1) regarding the bush (5) during the installstion of de stud, as hereinafter is described.

This configuration constitutes a double acting anti-rotation system: on one part, it hinders the parts (3) from rotating on themselves, since their end is adjusted between the edge of the sleeve (5) and the neck of the stud (1); and on the other, it prevents the stud (1) from rotating when tightening the installating tool or the nut (2), as said stud (1) is meshed with the pieces (3) and these remain fixed in the concrete by the pressure they exert on it. The stud (1) cannot be unmeshed from the pieces (3); therefore these pieces should move radially towards the outside, which is hindered by the adiustment with which the edge of the pieces (3) is introduced between the sleeve (5) and the neck of the stud (1).

The meshing of the grooves of pieces (3) with those of the neck and those of the head of the stud (1) is favoured by the forces which are exerted between both when folding the pieces (3) during the installation of the stud.

The grooves of the pieces (3) may be previously cut, or if the material of which they are made is softer than that of the stud (1) they form during the installation of the stud by the pressure which the stud (1) exerts on in, to fold them as hereinafter is explained.

The double meshing of the pieces (3) with the neck and the head of the stud (1) avoids these pieces to be crossed regarding the axle of the stud (1) as it might happen if they were to be meshed with it at one of its ends only.

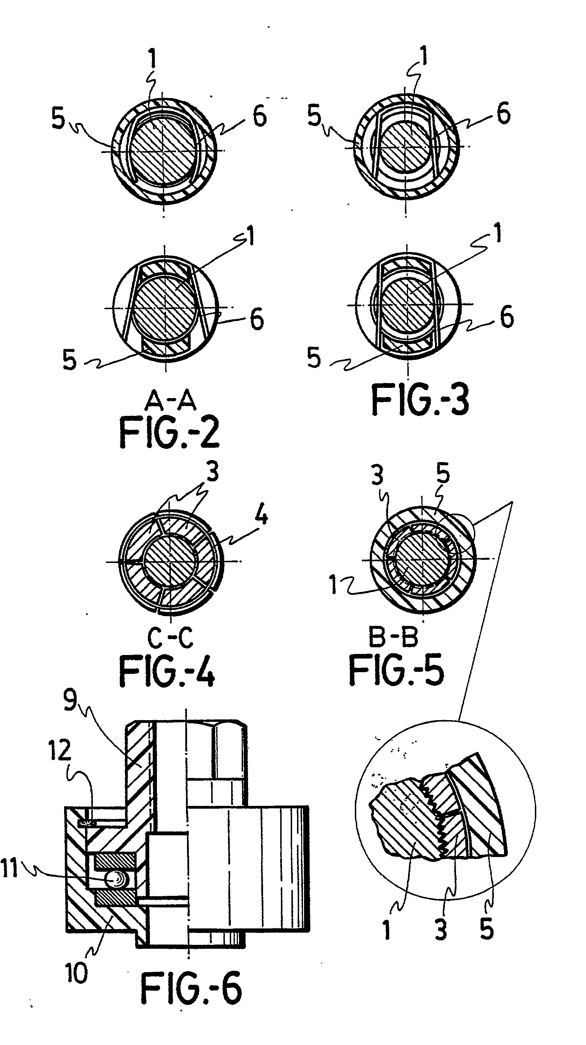

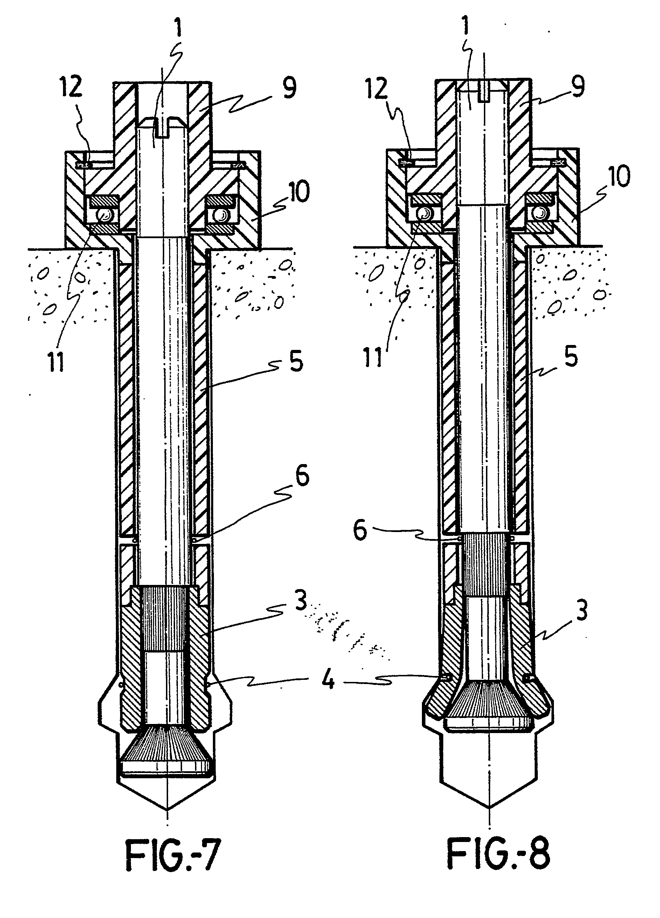

The pieces (3) have, at their external surface, a transverse slot (see Fig. 4) which has a double function: to serve as a housing to the circular elastic ring (4) through which the pieces (3) are held in position around the neck of the stud (1), and to allow to fold the end of the pieces (3) towards the outside by an angle equal to that of conicity of the trunk-conical head of the stud during the installation of the stud (see Fig. 8). Therefore, this slot or groove A has the necessary depth and width.

The groove divides the pieces (3) in two different shape areas, as described hereunder.

The transverse section of the pieces (3) between the groove for folding and its end adjacent to the sleeve (5) is a circular crown sector, which internal and external diameters are respectively the same to that of the neck of the stud (1) and to that of the bigger base of the trunkconical head of said stud (1). The circumferential dimension of the pieces (3) is such that, when installed around the neck of the stud (1), the perimeter of all them completes a cylinder.

The pieces (3) between the groove for folding and its end adjacent to the trunk-conical head of the stud (1) may have two alternative shapes: either a prismatic shape like the rest of the piece (3), or a shape such that, when the piece is folded through the groove of the angle set forth, the internal and external surfaces of this area form cone trunks, which conicity angles are the same respectively to that of the trunk-conical head of the stud (1) and to that of the cavity of the drill in which the anchoring stud is installed. To attain this before making said folding, the transverse sections of the pieces (3) in this area are made up by sectors of circular crowns which diameters vary respectively along the length of the piece (3) with the same formula of variation as the diameters of the trunk-conical head of the stud and of the cavity of the drill. In this latter alternative a total contact of the folded end of the pieces (3) is obtained with the trunk-conical head of the stud and with the surface of the cavity of the drill.

The length of the pieces (3) between the goove for folding and its edge adjacent to the trunk-conical head of the stud (1) is the adequate one so that when folding said pieces at the angle previously cited, its ends overlap laterally a dimension that is determined by the width of the cavity existing in said drill.

The area of the pieces (3) comprised between the groove for folding and its end adjacent to the sleeve (5) produces a radial pressure in the walls of the drill made on the concrete, which avoids that said walls fall towards the inside as a consequence of the force that the rest of the pieces (3) exert on the cavity of the drill. Therefore, its length is the adequate one so that they cause pressure on the area to which, in accordance with the theories or resistance of materials, are produced the greatest efforts.

The sleeve (5) is a cylindrical, hollow piece which internal and external diameters are respectively the same as the general diameter of the stud (1) and as the diameter of the bigger base of its trunk-conical head (and, therefore, it is also the same as the drill in which the stud is installed). Its length is the adequate one so that, when levelled with the surface of concrete (with the tolerance hereinafter indicated), the groove of the pieces (3) will be opposed with the beginning of the cavity of the drill.

The bush (5), on its external face, has a circunferential groove in which an U-shaped elastic fork (wire or strap) (6) is housed. The groove perforates the wall of the sleeve in two diametrically opposed areas through which the two legs of the fork (6) contact the stud (1). The task of this fork is that, when the stud (1) moves with respect to the sleeve (5) to fold the pieces (3) during the installation of the stud, its two legs get closed around the neck of the stud (1) (see Figs. 2 and 3) when the folding of said pieces (3) is completed. This way, the stud (1) and the sleeve (5) are seized between themselves, and it is hindered that the stud (1) falls into the depth of the drill (when the stud is installed on floors) and it is avoided that the pieces (3) be misplaced once folded. The separation between the two legs of the U is deformed (see Fig. 2) when opposed to the normal area of the stud, and this deformation is elastically recuperated when opposed with the neck of the stud (see Fig. 3).

The groove is located at the bush (5) in the position necessary for the fork (6) to reach the beginning of the neck of the stud (1) when the folding of the pieces (3) is completed.

The echelon which the stud has at the initiation of the neck is abrup (normally at a right angle), so that once the fork (6) has been closed, it may not be opened again.

In other alternative solution, the fork (6) could be installed in a groove located inside the bush. In this solution, it would not he necessary for the groove to perforate the walls of the sleeve (5).

The anchoring stud made up as previously described is adequate to be installed in a drill having a cavity in its depth (see Fig. 7) because, and as previously stated and can be seen in Fig. 8, when the pieces (3) are folding during the installation of the stud, its ends overlap laterally from the perimeter of the drill, penetrating in said cavity.

For folding the pieces (3), the tool which can be seen semi-sectioned in Fig. 6 is used.

This tool comprises a cylindrical first piece (9) internally threaded in correspondence with the thread of the stud (1), which first piece, at one of its ends, has a poligonal head movable with a key, whilst at the other end it has a plain surface which makes frontal contact, with interposition of an axial bearing or anti-friction bush, with a second piece (10) having two plain faces, one of which being in contact with the first piece, and the other one, in use, being in contact with an area surrounding the hole for insertion of the anchor and from which coaxially protrudes a neck, which internal and external diameters are respectively coincident with the internal and external diameters of the sleeve (5), both pieces (9, 10) being held coupled with the cooperation of an elastic ring (12).

During the installation of the stud, the frontal surface of the second piece (10) is supported on the surface of the concrete and its neck is inserted in the drill made on the concrete. The neck of the second piece (10) has length adequate so that, in this position, the groove of the pieces (3) will be opposed to the initiation of the cavity existing in the drill.

The full length of the tool is adequate so that during the installation of the expansion anchor assembly, the end of the stud (1) is levelled with the end of the threaded piece (9) of the tool, when the folding set forth for the pieces (3) is completed.

The installation procedure of the stud in the drill is the following:

The tool is screwd to the stud (1) until it abuts against the sleeve (5) and is introduced along the drill until the front part of the tool makes stop with the concrete surface. In this situation, the groove of the pieces (3) is opposed with the initiation of the cavity of the drill. The tool is rotated, screwing it to the stud (1) with which the the same is moved towards the outside of the drill (see Fig. 8), so that its trunk-conical head presses on the end of the pieces (3) forcing them to be folded along the groove and is introduced in the cavity of the drill.

At the same time, due to the movement of the stud (1), the fork (6) is moved along it and reaches the neck of said stud (1) when the folding of the pieces (3) is completed, closing around when it exceeds the echelon existing at dering that the whole of the bolt be disassembled and that the pieces (3) be displaced.

The meshing between the grooves of the pieces (3) and those of the head and the neck of the stud (1) sets forth an anti-rotation system which allows the tightening of the stud during the folding of the pieces (3).

The adjustment of the end of the pieces (3) between the stud (1) and the sleeve (5) prevents these pieces, once-meshed, to be unmeshed.

The existence of an area of the pieces (3) which, once folded, adopts a trunk-conical shape, allows the establishment of a full contact with the head of the stud and the surface of the widening of the drill, with which it is attained a better transmission of the loads to be supported.

The remaining part of the pieces (3) exerts an internal pressure on the walls of the drill, banding innerly the mostly tensioned area of the concrete, with which it is hindered that said wall fall by the force exerted by the folded areas of the pieces (3).

## Claims

1. Expansion Anchor Assembly comprising a stud having a threaded end (1) cooperating with a nut (2) and a washer (7) and at its opposite end a trunk conical head, striated in the sense of its generatrixes, which bigger free base has a diameter bigger than the diameter of the stud, whilst its smaller base coincides in diameter with a neck of the stud adjacent said head, said neck having a smaller diameter than the rest of said stud and being striated in the sense of its generatrixes in its terminal zone next to the sector of bigger diameter of the stud, having a plurality of pieces (3), basically prismatic and having with the same length as said neck being installed around said neck, which pieces, in their whole, configurate a hollow cylinder, the internal surfaces of said pieced being longitudinally striated and their external surfaces being provided with a perimetral folding groove (4) for establishing a housing for an elastic retention ring for said pieces against said neck and for weakening said pieces to allow the folding of the pieces towards the outside, with an angle equal to that of the conicity of the trunk-conical head of the stud, thereby dividing said pieces in two areas of different transverse cross section, a first ares adjacent to the head of the stud which inner and outer diameters vary lineally along their length and a second area a transverse cross section in the shape of circular crown sector, with constant inner and outer diameters in their full length, with the exception of its free end area having an offset protruding into the bore of a sleeve (5) which encloses coaxially the sector of the stud of bigger diameter, said sleeve having the same inner and outer diameter, respectively, as the stud and the bigger base of the head and further having a perimetral groove in which is installed an elastic fork the arms of which pressing against the stud at two diametrically opposite areas so that during the anchoring the arms move along the stud until, after total folding of the pieces, they snap behind a step, defined between the neck of the stud and the sector of same of bigger diameter.

2. Expansion Anchor Assembly, according to claim 1, characterized in that said step is defined by an abrupt echeloning, preferably in a right angle, concretely in the working area of the arms of the fork (6).

3. Expansion Anchor Assembly, according to claims 1 or 2, characterized in that the striae in the internal surface of the pieces (3) are cut previously, or if the pieces are of a material softer than the stud, the striae are cut during the installation of the anchor by the pressure exerted between the pieces and the stud.

4. Tool for installing an expansion Anchor Assembly, according to anyone of claims 1 to 3, comprising a first cylindrical piece (9), internally threaded in correspondence with the thread of the stud, which first piece, at one of its ends, has a polygonal head movable with a key, whilst at the other end it has a plain surface which makes frontal contact with interposition of an axial bearing or antifriction bush, with a second piece (10) having two plain faces, one of which being in contact with the first piece, and the other one, in use, being in contact with an area surrounding the hole for inserting the anchor, and from which coaxially protrudes a neck, which internal and external diameters are respectively coincident with the diameters, internal and external, of the sleeve (5), both pieces (9, 10) being held coupled with the cooperation of an elastic ring (12)

5. Tool for installing an Expansion Anchor Assembly according to claim 4, the full length of which is adequate so that during the installation of the expansion anchor assembly, the end of the stud (1) is levelled with the end of the threaded piece (9) of the tool when the folding set forth for the pieces (3) is completed.

**Patentansprüche**

1. Spreizverankerungsgefüge, das sich zusammensetzt aus einem Stift mit einem Gewindeende (1), der mit einer Mutter (2) und einer Scheibe (7) zusammenwirkt und am entgegengesetzten Ende ein kegelstumpfförmiger Kopf, gerieft in Richtung seiner Mantellinien, dessen grössere freie Basis einen grösseren Durchmesser besitzt als der Durchmesser des Stiftes, während die kleinere Basis in Bezug auf den Durchmesser mit dem Ansatz des an diesem Kopf anliegenden Stiftes übereinstimmt; besagter Ansatz besitzt einen kleineren Durchmesser als der restliche Stift und ist in Richtung seiner Mantellinien in der Endzone nahe dem Abschnitt mit grösserem Durchmesser des Stiftes gerieft, eine Mehrzahl von Teilen (3) aufweisend, im Wesentlichen prismatisch und mit einem Querschnitt in Form eines kreisrunden Kronenabschnittes, mit gleicher Länge wie der besagte Ansatz, rund um diesen Ansatz installiert, dessen Teile insgesamt einen hohlen Zylinder bilden, wobei die Innenflächen dieser Teile in Längsrichtung gerieft sind und die Aussenflächen dieser Teile mit einer Rille perimetral (4) umgelegt sind, um eine Aufnahme zu bilden, die einen elastischen Haltereif für diese Teile gegen den besagten Ansatz aufnehmen soll, um diese Teile zu entspannen, sodass die Umlegung der Teile mit einem Winkel gleich der Kegelform des kegelstumpfförmigen Kopfes des Stiftes ermöglicht wird, indem auf diese Weise besagte Teile in zwei Zonen verschiedenen Querschnittes aufgeteilt werden: eine erste Zone, am Kopf des Stiftes anliegend, dessen Innen- und Aussendurchmesser gradlinig sich auf der ganzen Länge verändern und eine zweite Zone, mit konstantem Innen- und Aussendurchmesser auf der ganzen Linie, ausgenommen die Zone des freien Endes, die einen Wulst aufweist, der aus dem Innendurchmesser einer Manschette (5) hervorragt, die gleichachsig den Abschnitt des Stiftes mit grösserem Durchmesser umschliesst, wobei besagte Manschette den gleichen Innen- und Aussendurchmesser aufweist wie der Stift und während die grössere Basis des Kopfes ausserdem eine perimetrische Rille aufweist, innerhalb welcher eine elastische Gabel installiert ist, deren Arme auf den Stift an zwei diametral entgegengesetzten Stellen Druck ausüben, sodass bei der Verankerung sich die Arme längs des Stiftes bewegen, bis nach völligem Umlegen der Teile sich diese schlagartig nach Passieren einer Stufe schliessen, die zwischen dem Ansatz des Stiftes und seinem Abschnitt mit grösserem Durchmesser definiert ist.

2. Spreizverankerungsgefüge gemäss Anspruch 1, dadurch gekennzeichnet, dass besagte Stufe durch eine jähe Abstufung, bevorzugt rechtwinkelig, definiert wird und konkreterweise in der Arbeitszone der Arme der Gabel (6).

3. Spreizverankerungsgefüge, gemäss Anspruch 1 oder 2, dadurch gekennzeichnet, dass die an der Innenfläche der Teile(3) liegenden Riefen zuvor bewegt werden oder wenn die Teile aus weicherem Material als der Stift sind, bewegen sich die Riefen während der Installierung der Verankerung durch zwischen den Teilen und dem Stift ausgeübten Druck.

4. Werkzeug zum Anbringen eines Spreizverankerungsgefüges gemäss irgendeines der vorstehenden Ansprüche 1 bis 3, enthaltend ein erstes zylindrisches Teil (9), innen mit Gewinde, entsprechend dem Gewinde des Stiftes, welches erste Teil an einem seiner Enden einen polygonalen Kopf aufweist, der sich mit einem Schlüssel bewegen lässt, während an dem anderen Ende eine ebene Fläche vorhanden ist, die frontalen Kontakt mit Zwischenschaltung eines Achslagers oder reibungsverhindernden Hülse mit einem zweiten Teil (10) herstellt, der zwei Planseiten aufweist, eine davon in Berührung mit dem ersten Teil und die andere Seite, die im Einsatz ist, im Kontakt mit einer Zone, die das Loch umgibt zum Einführen der Verankerung und aus welchem koaxial ein Ansatz hervorsteht, dessen Innendurchmesser und Aussendurchmesser jeweils mit Innen- und Aussendurchmesser der Manschette (5) übereinstimmen, wobei beide Teile (9, 10) mit der Zusammenwirkung eines elastischen Reifens (12) gekuppelt sind.

5. Werkzeug zum Anbringen eines Spreizverankerungsgefüges gemäss Anspruch 4, dessen Gesamtlänge eine derart angemessene ist, dass während der Installierung des Verankerungsgefüges das Ende des Stiftes (1) Niveau hält mit dem Ende des Gewinteteils (9) des Werkzeuges, wenn die Umlegung, die für beide Teile (3) vorgesehen ist, vollbracht ist.

## Revendications

1. Ensemble d'ancrage de dilatation comportant un goujon dont une extrémité filetée (1) coopérant avec un écrou (2) et une rondelle (7) et présentant à l'extrémité opposée une tête tronconique striée dans le sens de ses génératrices, et dont la base libre la plus grande a un plus grand diamètre que le diamètre du goujon, alors que sa plus petite base coïncide, quant à son diamètre, avec le collet du goujon adjacent à ladite tête, ledit collet ayant un diamètre plus petit que le reste du goujon en question et étant strié dans le sens de ses génératrices à son extrémité proche du secteur de plus grand diamètre du goujon, qui comporte une pluralité de pièces (3), fondamentalement prismatiques, et dont la section transversale a la forme d'un secteur circulaire en couronne de la même longueur que ledit collet, laquelle est installée autour du collet précité dont les pièces, dans l'ensemble, configurent un cylindre creux, les surfaces intérieures desdites pièces étant elles-mêmes striées longitudinalement et leurs surfaces extérieures étant pourvues d'une rainure ou gorge de pliage périmétrique (4) pour configurer un logement destiné à recevoir un jonc d'arrêt élastique ou circlip pour retenir lesdites pièces contre le collet précité et pour relâcher ces dernières afin de pouvoir rabattre lesdits pièces vers l'extérieur, suivant un angle égal/à celui de conicité de la tête tronconique du goujon, en divisant de la sorte lesdites pièces en deux zones de différente section-transversale: une première zone adjacente à la tête du goujon dont les diamètres intérieur varient linéairement sur toute leur longueur, et une deuxième zone, aux diamètres intérieur et extérieur constants sur toute leur longueur, à l'exception de la zone de son extrémité libre qui présente un rebord faisant saillie à l'intérieur du diamètre intérieur d'un manchon (5) qui renferme coaxialement le secteur du goujon présentant le plus grand diamètre, ledit manchon ayant respectivement le même diamètre intérieur et extérieur que le goujon, la base la plus grande de la tête arborant en outre une rainure ou gorge périmétrique à l'intérieur de laquelle se trouve installée une fourchette ou chape élastique dont les bras exercent une pression contre le goujon en deux endroits diamétralement opposés de telle sorte que, lors de l'ancrage, les bras se déplacent tout au long du goujon jusqu'au moment où, après que les pièces se soient totalement rabattues, ils se referment d'un seul coup derrière un échelon défini entre le collet du goujon et le secteur de celui-ci au plus grand diamètre.

2. Ensemble d'ancrage de dilatation, conformément à la revendication 1, se caractérisant en ce que ledit échelon est défini par un échelonnement brusque, de préférence à angle droit, et plus concrètement dans la zone de travail des bras de la fourchette (6).

3. Ensemble d'ancrage de dilatation, conformément aux revendications 1 ou 2, se caractérisant en ce que les stries situées sur la surface intérieure des pièces (3) sont ménagées au préalable ou encore, si les pièces sont faites dans un matériau plus mou que le goujon, les stries sont ménagées pendant l'installation de l'ancrage, par la pression exercée entre les pièces et le goujon.

4. Outil pour l'installation d'un ensemble d'ancrage de dilatation conformément à l'une quelconque des revendications 1 à 3, qui comporte une première pièce cylindrique (9), filetée intérieurement, en correspondance avec le filetage du goujon, ladite première pièce présentant, à l'une de ses extrémités, une tête polygonale qui peut être bougée à l'aide d'une clé, tandis qu'à l'autre extrémité elle présente une surface plane qui établit un contact frontal, grâce à l'interposition d'un coussinet ou butée axiale, ou bien d'une bague antifriction, avec une seconde pièce (10) qui présente deux faces planes dont l'une se trouve en contact avec la première pièce tandis que l'autre face, celle utilisée, se trouve en contact avec une zone qui entoure le trou pour introduire l'ancrage et d'où dépasse, coaxialement, un collet dont les diamètres intérieur et extérieur coïncident respectivement avec les diamètres intérieur et extérieur du manchon (5), les deux pièces (9, 10) étant assemblées par l'intermédiaire d'un jonc élastique ou circlip (12).

5. Outil pour l'installation d'un ensemble d'ancrages de dilatation, conformément à la revendication 4, dont la longueur totale est appropriée de sorte que, lors de l'installation de l'ensemble d'ancrage de dilatation, l'extrémité du goujon (1) se trouve au même niveau que l'extrémité de la pièce filetée (9) de l'outil lorsqu'a eu lieu le rabattement établi pour les pièces (3).

FIG.-1

EP 0 226 524 B1

FIG.-2 (A-A)

FIG.-3

FIG.-4 (C-C)

FIG.-5 (B-B)

FIG.-6

EP 0 226 524 B1

FIG.-7

FIG.-8

FIG.-9